# EUROPEAN PATENT SPECIFICATION

(11) **EP 2 050 661 B1**
(45) Date of publication and mention of the grant of the patent: **27.01.2010**
(21) Application number: 07020373.2
(22) Date of filing: 18.10.2007
(51) Int. Cl.: B62D 25/18

(54) **Wheel cover**
Radkappe
Enjoliveur

(43) Date of publication of application: 22.04.2009
(73) Proprietor: GM Global Technology Operations, Inc., Detroit, MI 48265-3000 (US)
(72) Inventor: Lundström, Jesper, 46242 Vänersborg (SE)
(74) Representative: Daniel, Ulrich W.P.

(56) References cited:
- DE-A1- 10 312 089
- FR-A- 546 216
- FR-A- 685 293

## Description

### Field of the Invention

The present invention relates to a wheel cover for an automotive vehicle, which is arrangeable to cover at least a part of a wheel opening in a wheel housing, said opening is limited by a curved edge portion of the wheel housing, said wheel cover comprises at least one cover element, which is movable from a first position to at least a second position.

### Technical Background

It is known that automotive vehicles may have permanent wheel covers in order to reduce the air resistance of the vehicle and at the same time protect the wheels from dirt. However, it is not always desirable to have permanent wheel covers for example for design reasons. A permanent cover also makes it harder to change the wheels of the vehicle, since access to the wheels is limited. Therefore, there is a need for adaptive wheel covers.

DE10312089 A1 discloses a device for opening and closing a wheel cover in an opening of the wheel housing. The wheel cover is made from a flexible cover material and the device has a driving device, which operates the wheel cover between a passive position and an active position. The flexible wheel cover is mounted inside the wheel housing and takes the shape of a roller blind or some sort of foldable device, which is larger than the opening in the wheel house. The relatively space taking wheel cover and its driving device therefore has to be mounted during the assembly of the vehicle. The space around the wheel house on a vehicle is also often very limited due to other parts and design.

However, there is still a need for a more compact device, which is easy mount even after the vehicle has been assembled.

### Summary of the Invention

The object of the present invention is to provide a wheel cover that overcomes the above issues. Hence, the invention according to claim 1 discloses a wheel cover for an automotive vehicle, which is arrangeable to cover at least a part of a wheel opening in a wheel housing, said opening is limited by a curved edge portion of the wheel housing, said wheel cover comprises at least one cover element which is movable from a first position to at least a second position. At least a portion of said cover element is positioned close to and movable along said curved edge portion when said wheel cover is arranged to said wheel housing. An arrangement like this, with at least one movable cover element makes it possible to position the cover element or the cover elements where they improve the aerodynamic performance at most in respect to the speed of the vehicle. By positioning at least a portion of the cover element close to and moving it along said curved edge portion of the wheel opening in the wheel housing it is not necessary that the wheel cover is larger than the opening itself.

Preferably, said wheel cover is supported by said curved edge portion of said wheel house opening. By supporting the wheel cover to said curved edge portion the wheel cover may be free from the wheel.

Preferably, said wheel cover comprises at least two cover elements, which are mutually movable. This way the wheel cover can adapt to the air flow conditions.

Advantageously, said first position is a wheel exposure position. The wheel exposure position is when a larger part of the wheel and its rims are shown. The wheels and the rims is often to show when the vehicle for example is parked or driven slowly.

Advantageously, in said second position said opening will be covered to a larger extent than in said first position. This may improve the aerodynamic performance further. The more area covered, the less is the air turbulence depending on the overall design of the vehicle.

Advantageously, at least one of said cover elements is directly mounted to said wheel house. This way the wheel cover do not need other arrangements to be arranged to the wheel housing. Other arrangement could for example be a bar attached to vehicle body to which the cover elements are attached.

Said at least one directly mounted cover element is at least partly overlapping at least one second cover element when the wheel cover is in its said wheel exposure position. This way the cover elements may be stored in an effective way. No extra space within the wheel house is needed.

Preferably, said wheel cover is controlled by a motor. However it may be controlled by any known technique.

Said wheel cover may be remotely controlled. This may for example be done through a pushbutton inside the vehicle. The driver of the vehicle may then himself decide when he wants show the wheels or cover them to improve the aerodynamics of the vehicle.

Advantageously, said wheel cover may be automatically adjusted. This way the user does not have to be disturbed during driving. This could be done by using for example a sensing device, which senses the speed of the vehicle. When the vehicle reaches a certain speed the sensing device may alert automatically that the wheel cover shall move to its first or second position. For example, if the vehicle is driving at a low speed the sensing device may alert that the wheel cover shall go to its first wheel exposure position and when the vehicle reaches a predetermined higher speed it alerts that it should move to its second position.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. Other objectives, features and advantages of the present invention will appear from the following detailed disclosure, from the attached dependent claims as well as from the drawings.

### Brief Description of the Drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 discloses a perspective view of a wheel house of a vehicle with one embodiment of the wheel cover according to the invention in a first wheel exposure position.
Fig. 2 discloses a perspective view of a wheel house of a vehicle with the wheel cover in Fig. 1 in a second position.
Fig. 3a-3d discloses a front view of the wheel cover described in Fig. 1 and 2. and the steps going from a first position to a second position.
Fig. 4 discloses a perspective view of the wheel cover in Fig. 3c according to the invention.
Fig. 5 discloses a cross section of I - I in fig. 1.

### Detailed Description of Preferred Embodiments

A currently preferred embodiment of the present invention will now be described in more detail, with reference to the accompanying drawings.

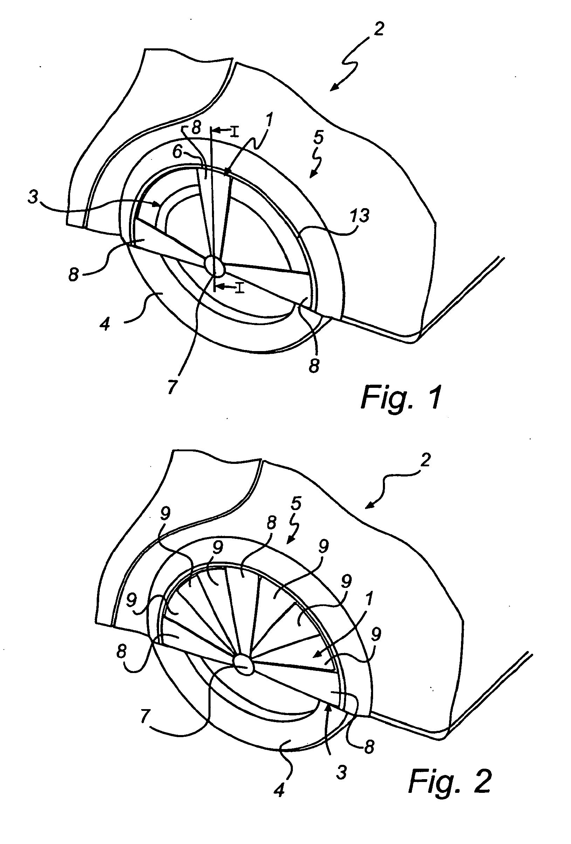

Fig. 1 shows a part of a rear part 2 of a vehicle with a wheel cover 1 arranged to its wheel housing 5. The wheel cover 1 may also be arranged to the wheel housing at the front part of the vehicle. The wheel cover 1 is in a first position which is a wheel exposure position where a large part of the wheel 4 and its rim is shown when the vehicle for example is parked or going at a low speed. The wheel cover 1 shows three cover elements 8, where the cover elements 8 has a flat blade shape. However, the cover elements 8 is not limited to this shape. They are in this case of the same type however, they may differ. These three cover elements 8 are arranged to each other at a common centre point 7. This arrangement may be formed in one piece, as shown, or several pieces connected together. The cover elements 8 may be fixed arranged to each other or movable connected for example around a shaft (not shown) in the common centre point 7. The three cover elements 8 are at their outer periphery 6 fixedly arranged to the wheel housing 5 of the vehicle. Preferably near the wheel house 5 opening 3, which is limited by curved edge portion 13. The curved edge portion do not have to be circular, it may take any form. Behind each of these fixed cover elements 8 at least one second movable cover element (not shown) may be stored. However, in some cases there may be none behind. The movable elements are movable arranged to the fixed cover elements 8 at the centre point 7.

Fig. 2 shows the rear part 2 of the vehicle with the wheel cover 1 in a second position. In the second position the upper part of the wheel 4 and the opening 3 of the wheel house 5 is covered by the fixed cover elements 8 and the cover elements 9, which was stored behind the fixed cover elements 8 in its first position. By covering the wheel 4 and the wheel house 5 opening 3, or at least a part of it, the aerodynamic performance of the vehicle can be improved. This is especially apparent at higher speeds.

The cover elements 9 stored behind the fixed cover elements 8 will hereafter be called movable cover elements 9. The movable cover elements 9, behind the fixed cover elements 8 in fig. 1 are moved by rotation around a axis in the centre point 7 so that they get to an exposed position and together they create a wheel cover 1 with a fan shape. The rotation may be done by using for example a motor. This could be an electrical motor or any other device known in the art. In addition it could be achieved through for example air holes in the wheel housing 5 where the velocity of the air activates the rotation of the cover elements 9 when the vehicle reaches a certain speed.

The actuation of the rotation may be done through a push button which the driver pushes when he thinks it is appropriated or it could be automatically done through a sensing device which senses the speed of the vehicle. When the vehicle reaches a certain speed it automatically rotates the cover elements so it gets to its second position. This can also be done the other way around i.e. when the wheel cover 1 shall go back to its first position i.e. the wheel exposure position.

The number of movable cover elements 9 stored behind the fixed elements may differ. Here six movable elements 9 are shown. However, they could be more or fewer. The direction of the movement/rotation may be the same or opposite. The number of fixed cover elements 8 is also not limited to three. They could be more or fewer. The so called fixed cover elements do not have to be fixed to the wheel house at all, all the cover elements 8, 9 could be movable and arranged to a arranging device, such as a shaft which may be arranged to the wheel house 5 or to the wheel house body. The wheel cover 1 is mounted close to the curved edge portion 13 of the opening 3 in the wheel house 5 in order to make it accessible. The wheel cover 1 could then easily be mounted even after the vehicle have been assembled. This would make it possible for a user to buy a wheel cover 1 off the shelf and mount it himself. To fixate the wheel cover 1 to the wheel house 5 any fasteners known in the art may be used, for example screws. Preferably the fastener is a fastener which may be used again or which at least allows an easy opening so that the wheel cover 1 easily may be taken away for example when a wheel 4 have to be changed. The fastener may be a fastener which is specific for each wheel cover 1 or for a set of wheel covers 1, so that the owner of the vehicle is the only one which may take them of, this in order to prevent theft.

When mounted to the wheel house 5 the outer periphery 6 (which is the same as the one for the fixed elements 8 in fig. 1) of the movable cover elements 9, when rotating, is following the curved edge portion 13 of the opening 3 of the wheel house 5. This way the wheel cover 1 takes up limited space within the vehicle.

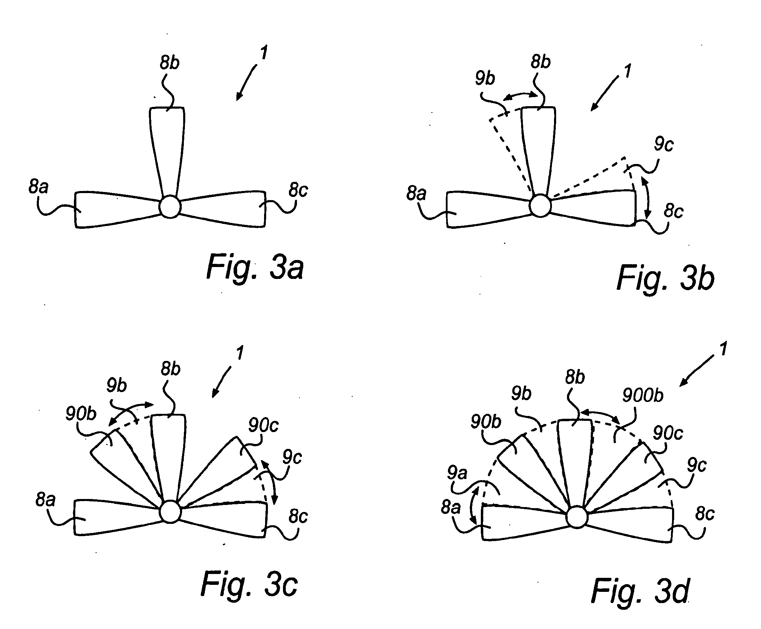

Fig. 3a - 3d shows the steps of how the wheel cover 1 may move from its first position which is a wheel exposure position to its second position which is a wheel covering position. There is however many other variants how this may be done.

Fig. 3a shows the three fixed cover elements 8a, 8b, 8c which will be arranged to the wheel house (not shown).

In Fig. 3b the movable cover elements 9b and 9c has reached their positions. The movable cover element 9b has moved from its position behind the fixed cover element 8b and the movable cover element 9c has moved from its position behind the fixed cover element 8c.

In Fig. 3c the movable cover elements 90b and 90c have reached their wheel covering positions. The movable cover element 90b has moved from its position behind the fixed cover element 8b and the movable cover element 9b. The movable cover element 90c has moved from its positions behind the fixed cover element 8c and the movable cover element 9c.

In Fig. 3d the movable cover elements 9a and 900b have reached their wheel covering positions. The movable cover element 9a has moved from its position behind the fixed cover element 8a and the movable cover element 900b has moved from its position behind the fixed cover element 8b. The wheel cover 1 has now reached its covering position and its fan shape. The process of returning to the first position is similar but reversed. However, this is only one example how this could be done.

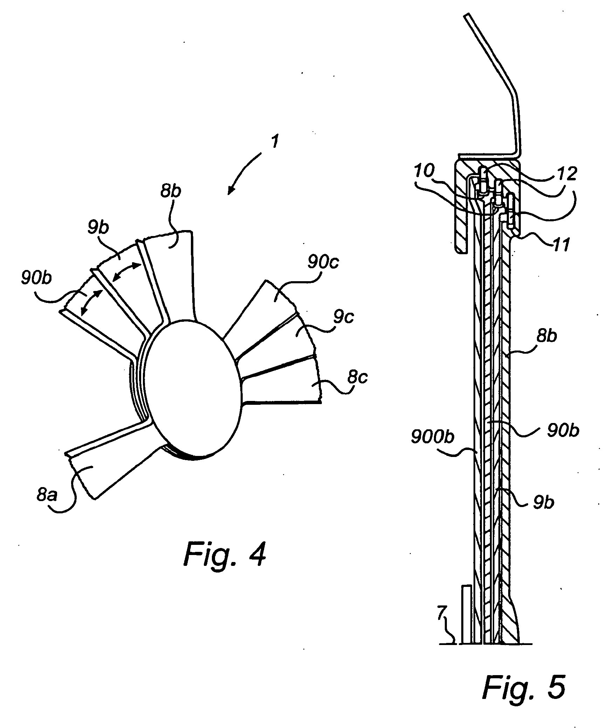

Fig. 4 is an enlarged perspective view of the wheel cover 1 as it is in its position shown in Fig. 3c. The movable cover element 9b and 90b has reached its position. The movement of the two movable cover elements 9b, 90b may be done simultaneously or first one and then the other. The same goes for 9c and 90c.

Fig. 5 shows the cross section I-I in Fig. 1. when the movable blades 9b, 90b, 900b are stored behind the fixed blade 8b. The fixed blades 8a, 8b, 8c all have at least one groove 11, in which their respectively movable blades may travel in. The movable blades 9b, 90b, 900b may have a ball bearing 12 so that they may move smoother in groove 11. The movable cover elements 9b, 90b may also have grooves 10 in which the movable cover element 90b, 900b next to it may travel. These grooves 10, 11 work as steering grooves for the movable cover elements 9b, 90b, 900b. The other fixed and movable cover elements have similar performance. The movable cover elements and fixed cover elements are all arranged movable or fixed to each other around an axis 7, where a pivotable shaft may be connected to the arrangement (not shown).
When the wheel cover is in a wheel covering position and the vehicle is breaking one or more of the wheel cover elements could be instantaneous moved to let in more air for break cooling. For example, it may have a sensing device that detect heat or how much the brakes are applied to be able to open up the wheel cover accordingly to let heat out.

The cover elements themself could also be arranged to so that they can be rotated to a certain angle. The cover elements may then get a position like the blades in a fan or a propeller, in order to allow more air to the wheels.

The wheel cover may be made of robust material. It could be made of, but is not limited to, metal, for example aluminium, carbon fibre or plastic, possibly with reinforcing of metal.

The invention has mainly been described above with reference to a few embodiments. However, as is readily appreciated by a person skilled in the art, other embodiments than the ones disclosed above are equally possible within the scope of the invention, as defined by the appended patent claims.

### Reference list - Wheel cover

1. Wheel cover
2. Rear part of the vehicle
3. Opening of the wheel house
4. Wheel
5. Wheel housing
6. Outer periphery of the cover element
7. Centre point
8. (8a, 8b, 8c)Fixed cover element
9. (9a, 9b, 90b, 900b, 9c, 90c) Movable cover elements
10. Groove
11. Groove
12. Ball bearing
13. Curved edge portion

## Claims

1. Vehicle wheel cover (1) arrangeable to cover at least a part of a wheel opening (3) in a wheel housing (5), wherein said opening (3) is limited by a curved edge portion (13) of the wheel housing (5), said wheel cover (1) comprises at least one cover element (8, 9) which is movable from a first position in which a large part of a wheel (4) is shown to at least a second position, in which an upper part of the wheel (4) is covered by the at least one cover element (8, 9) **characterized in that** at least a portion of said cover element (8, 9) is positioned close to and movable between a first and a second position along said curved edge portion (13) when said wheel cover (1) is arranged to said wheel housing (5).

2. Wheel cover (1) according to claim 1, wherein said wheel cover (1) is supported by said curved edge portion (13) of said wheel house (5) opening (3).

3. Wheel cover (1) according to any one of claims 1-2, in which said wheel cover (1) comprises at least two cover elements (8, 9), which are mutually movable.

4. Wheel cover (1) according to any one of claims 1-3, wherein said first position is a wheel exposure position.

5. Wheel cover (1) according to any one of claims 1- 4, wherein in said second position said opening (3) will be covered to a larger extent than in said first position.

6. Wheel cover (1) according to any one of claims 1-5, wherein at least one of said cover elements (8) is directly mounted to said wheel house (5).

7. Wheel cover (1) according to claim 6, wherein said at least one directly mounted cover element (8) is at least partly overlapping at least one second cover element (9) when said wheel cover is in its said first position.

8. Wheel cover (1) according to any one of claims 1-7, wherein said wheel cover (1) is controlled by a motor.

9. Wheel cover (1) according to any one of claims 1-8, wherein said wheel cover (1) is remotely controlled.

10. Wheel cover (1) according to any one of claims 1-9, wherein said wheel cover (1) is automatically adjusted.

## Patentansprüche

1. Radkappe (1) eines Fahrzeugs, die so angeordnet werden kann, dass sie zumindest einen Teil einer Radöffnung (3) in einem Radkasten (5) bedeckt, wobei die Öffnung (3) durch einen gebogenen Randabschnitt (13) des Radkastens (5) begrenzt ist, wobei die Radkappe (1) mindestens ein Abdeckelement (8, 9) aufweist, das von einer ersten Position, in der ein großer Teil des Rades (4) gezeigt wird, bis mindestens zu einer zweiten Position, in der ein oberer Teil des Rades (4) durch das mindestens eine Abdeckelement (8, 9) bedeckt ist, bewegt werden kann, **dadurch gekennzeichnet, dass** mindestens ein Teil des Abdeckelements (8, 9) nahe an dem und beweglich zwischen einer ersten und zweiten Position entlang des gebogenen Randabschnitt(s) (13) positioniert ist, wenn die Radkappe (1) am Radkasten (5) angeordnet ist.

2. Radkappe (1) gemäß Anspruch 1, wobei die Radkappe (1) von dem gebogenen Randabschnitt (13) der Öffnung (3) des Radkastens (5) gehalten wird.

3. Radkappe (1) gemäß einem der Ansprüche 1 - 2, wobei die Radkappe (1) mindestens zwei Abdeckelemente (8, 9) umfasst, die zueinander beweglich sind.

4. Radkappe (1) gemäß einem der Ansprüche 1 - 3, wobei die erste Position eine Radexponierungsposition ist.

5. Radkappe (1) gemäß einem der Ansprüche 1 - 4, wobei in der zweiten Position die Öffnung (3) in einem größeren Ausmaß bedeckt ist als in der ersten Position.

6. Radkappe (1) gemäß einem der Ansprüche 1 - 5, wobei mindestens eines der Abdeckelemente (8) unmittelbar am Radkasten (5) montiert ist.

7. Radkappe (1) gemäß Anspruch 6, wobei das mindestens eine unmittelbar montierte Abdeckelement (8) zumindest teilweise mindestens ein zweites Abdeckelement (9) überlappt, wenn sich die Radkappe in ihrer ersten Position befindet.

8. Radkappe (1) gemäß einem der Ansprüche 1 - 7, wobei die Radkappe (1) von einem Motor gesteuert wird.

9. Radkappe (1) gemäß einem der Ansprüche 1 - 8, wobei die Radkappe (1) per Fernbedienung gesteuert wird.

10. Radkappe (1) gemäß einem der Ansprüche 1 - 9, wobei die Radkappe (1) per automatisch eingestellt wird.

## Revendications

1. Enjoliveur de roue de véhicule (1) pouvant être installé pour couvrir au moins une partie d'une ouverture de roue (3) dans un passage de roue (5), où ladite ouverture (3) est limitée par une partie à bord incurvé (13) du passage de roue (5), ledit enjoliveur de roue (1) comprend au moins un élément de protection (8, 9) qui est amovible à partir d'une première position dans laquelle une grande partie d'une roue (4) est visible jusqu'à au moins une deuxième position, dans laquelle une partie supérieure de la roue (4) est couverte par au moins un de ces éléments de protection (8, 9), **caractérisé en ce qu'**au moins une partie dudit élément de protection (8, 9) est positionnée à proximité et de façon déplaçable entre une première et une deuxième position le long de ladite partie à bord incurvé (13) lorsque cet enjoliveur de roue (1) est installé sur ledit passage de roue (5).

2. Enjoliveur de roue (1) selon la revendication 1, où ledit enjoliveur de roue (1) est soutenu par ladite partie à bord incurvé (13) de ladite ouverture (3) du passage de roue (5).

3. Enjoliveur de roue (1) selon l'une des revendications 1-2, où ledit enjoliveur de roue (1) comprend au moins deux éléments de protection (8, 9) qui sont mutuellement amovibles.

4. Enjoliveur de roue (1) selon l'une des revendications 1-3, où ladite première position est une position d'exposition de roue.

5. Enjoliveur de roue (1) selon l'une des revendications 1-4, où dans ladite deuxième position, ladite ouverture (3) sera couverte dans une plus grande mesure que dans ladite première position.

6. Enjoliveur de roue (1) selon l'une des revendications 1-5, où au moins l'un desdits éléments de protection (8) est directement monté sur ledit passage de roue (5).

7. Enjoliveur de roue (1) selon la revendication 6, où au moins l'un desdits éléments de protection monté directement (8) chevauche au moins en partie un deuxième élément de protection (9) lorsque ledit enjoliveur de roue est dans ladite première position.

8. Enjoliveur de roue (1) selon l'une des revendications 1-7, où ledit enjoliveur de roue (1) est commandé par un moteur.

9. Enjoliveur de roue (1) selon l'une des revendications 1-8, où ledit enjoliveur de roue (1) est commandé à distance.

10. Enjoliveur de roue (1) selon l'une des revendications 1-9, où ledit enjoliveur de roue (1) est automatiquement réglé.
